# EUROPEAN PATENT SPECIFICATION

(11) **EP 4 358 220 B1**
(45) Date of publication and mention of the grant of the patent: **25.11.2026**
(21) Application number: 22833010.6
(22) Date of filing: 24.06.2022
(51) Int. Cl.: H01G 11/06, H01G 11/50, H01G 11/62, H01M 10/0568, H01M 4/133, H01M 4/58, H01M 4/62, H01M 10/0525, H01G 11/32, H01M 10/0567, H01M 4/587, H01M 10/0569, H01G 11/46

(54) **NON-AQUEOUS ELECTROLYTE POWER STORAGE ELEMENT**
ENERGIESPEICHERELEMENT MIT NICHTWÄSSRIGEM ELEKTROLYT
ÉLÉMENT DE STOCKAGE D'ÉNERGIE À ÉLECTROLYTE NON AQUEUX

(30) Priority: 29.06.2021 JP 2021107627
(43) Date of publication of application: 24.04.2024
(73) Proprietor: GS Yuasa International Ltd., Kisshoin, Minami-ku, Kyoto-shi, Kyoto 601-8520 (JP)
(72) Inventor: KOBAYASHI Miwa, Kyoto-shi, Kyoto 601-8520 (JP); ABE Yasuyuki, Kyoto-shi, Kyoto 601-8520 (JP)
(74) Representative: Isarpatent
(86) International application number: PCT/JP2022/025226
(87) International publication number: WO 2023/276863

(56) References cited:
- CN-A- 111 009 687
- CN-B- 105 845 980
- CN-B- 106 848 404
- JP-A- 2014 209 470
- JP-A- 2014 209 470
- JP-A- 2016 085 837
- JP-A- 2017 041 426
- US-A1- 2015 180 022

## Description

### TECHNICAL FIELD

The present invention relates to a nonaqueous electrolyte energy storage device.

### BACKGROUND ART

Nonaqueous electrolyte secondary batteries typified by lithium ion secondary batteries are widely used in electronic equipment such as personal computers and communication terminals, motor vehicles, and the like since these secondary batteries have a high energy density. Nonaqueous electrolyte secondary batteries generally include a pair of electrodes, which are electrically separated from each other by a separator, and a nonaqueous electrolyte interposed between the electrodes, and are configured to allow ions to be transferred between the two electrodes for charge-discharge. In addition, capacitors such as lithium ion capacitors and electric double layer capacitors are also widely used as nonaqueous electrolyte energy storage devices other than the nonaqueous electrolyte secondary batteries.

As a positive active material of the nonaqueous electrolyte energy storage device, lithium iron phosphate is known (see Patent Document 1). Lithium iron phosphate has advantages such as being less expensive than cobalt-containing compounds such as lithium cobaltate.
JP 2014 209470 A discloses an energy storage device, in which the positive electrode includes iron phosphate as a positive electrode active material and the negative electrode includes graphite as a negative electrode material. Further, the energy storage device includes an electrolyte solution comprising a lithium salt, wherein the concentration of the lithium salt is higher than 0.25 M and lower than 1 M.
US 2015/0180022 A1 discloses an electrochemical cell including an electrolyte, wherein the electrolyte includes a lithium salt and a nonaqueous organic solvent. The lithium salt can be, among other things, LiFSI. CN 106 848 404 B describes a nonaqueous electrolyte energy storage device comprising a positive electrode containing lithium iron phosphate, a negative electrode containing at least one of graphite and non-graphitic carbon and carbon black and a nonaqueous electrolyte containing a lithium salt, wherein a concentration of the lithium salt in the nonaqueous electrolyte is 0.5 to 2 mol/L

### PRIOR ART DOCUMENT

### PATENT DOCUMENT

Patent Document 1: JP-A-2011-70802

### SUMMARY OF THE INVENTION

### PROBLEMS TO BE SOLVED BY THE INVENTION

The nonaqueous electrolyte energy storage device is required to maintain excellent initial performance even when charge and discharge are repeated. In particular, when lithium iron phosphate is used as the positive active material, elution of iron ions in the lithium iron phosphate into the nonaqueous electrolyte is one of the factors that deteriorate the performance. In the nonaqueous electrolyte energy storage device, usually, a discharge capacity gradually decreases with a charge-discharge cycle, while internal resistance gradually increases. Therefore, it is desirable that a capacity retention ratio after the charge-discharge cycle is high and an internal resistance increase rate is low.

The present invention has been made based on the foregoing circumstances, and an object of the invention is to provide a nonaqueous electrolyte energy storage device in which lithium iron phosphate is used for a positive electrode, the nonaqueous electrolyte energy storage device having a high capacity retention ratio after a charge-discharge cycle and a low internal resistance increase rate.

### MEANS FOR SOLVING THE PROBLEMS

The nonaqueous electrolyte energy storage device according to the invention is defined by the features of claim 1.

Further embodiments of the invention are defined in the appended claims.

### ADVANTAGES OF THE INVENTION

According to one aspect and another aspect of the present invention, it is possible to provide a nonaqueous electrolyte energy storage device in which lithium iron phosphate is used for a positive electrode, the nonaqueous electrolyte energy storage device having a high capacity retention ratio after a charge-discharge cycle and a low internal resistance increase rate.

### BRIEF DESCRIPTION OF THE DRAWINGS

Fig. 1 is an external perspective view showing a nonaqueous electrolyte energy storage device according to one embodiment of the present invention.
Fig. 2 is a schematic diagram showing an energy storage apparatus including a plurality of the nonaqueous electrolyte energy storage devices according to one embodiment of the present invention.

### MODE FOR CARRYING OUT THE INVENTION

First, an outline of a nonaqueous electrolyte energy storage device disclosed in the present specification will be described.

A nonaqueous electrolyte energy storage device according to one aspect of the present invention is a nonaqueous electrolyte energy storage device (A) including: a positive electrode containing lithium iron phosphate; a negative electrode containing at least one of graphite and non-graphitic carbon and carbon black; and a nonaqueous electrolyte containing a lithium salt, in which a concentration of the lithium salt in the nonaqueous electrolyte is 0.7 mol/dm³ or less.

The nonaqueous electrolyte energy storage device (A) has a high capacity retention ratio after a charge-discharge cycle and a low internal resistance increase rate. Although the reason why the above effect is produced in the nonaqueous electrolyte energy storage device (A) is not clear, the following reason is presumed. By lowering the concentration of the lithium salt in the nonaqueous electrolyte to 0.7 mol/dm³ or less, the viscosity of the nonaqueous electrolyte is lowered, and diffusibility of lithium ions is enhanced, so that the capacity retention ratio after the charge-discharge cycle is increased. Here, when the concentration of the lithium salt is simply lowered, ionic conductivity is lowered, and thus the internal resistance increases. On the other hand, in the nonaqueous electrolyte energy storage device (A), it is presumed that when carbon black is further contained in the negative electrode in addition to at least one of graphite and non-graphitic carbon which are negative active materials, a good conductive network is formed in the negative electrode, and as a result, the internal resistance increase rate after the charge-discharge cycle is lowered. In addition, it is also considered that when the negative electrode further contains carbon black, the carbon black occupies voids between the negative active material particles, thereby increasing the possibility of inhibiting the diffusion of lithium ions in the nonaqueous electrolyte in the voids of the negative electrode. However, in the nonaqueous electrolyte energy storage device (A), since the concentration of the lithium salt in the nonaqueous electrolyte is as low as 0.7 mol/dm³ or less, it is presumed that even when carbon black is further contained in the negative electrode, lithium ions in the nonaqueous electrolyte in the voids in the negative electrode have sufficient diffusibility, the capacity retention ratio after the charge-discharge cycle is high, and the internal resistance increase rate is low.

Here, the term "graphite" refers to a carbon material whose particle size is more than 500 nm and in which an average lattice distance (d002) of the (002) plane determined by an X-ray diffraction method before charge-discharge or in a discharged state is 0.33 nm or more and less than 0.34 nm. The term "non-graphitic carbon" refers to a carbon material whose particle size is more than 500 nm and in which the average lattice distance (d002) of the (002) plane determined by an X-ray diffraction method before charge-discharge or in the discharged state is 0.34 nm or more and 0.42 nm or less. The "carbon black" refers to a carbon material having a particle size of 500 nm or less.

The "particle size" of graphite, non-graphitic carbon, and carbon black is a Feret diameter of particles observed by SEM (scanning electron microscope).

The "discharged state" of the carbon material as the negative active material refers to a state where an open circuit voltage is 1.5 V or more in a unipolar battery using a negative electrode, containing a carbon material as a negative active material, as a working electrode and using metallic Li as a counter electrode. Potential of the metallic Li counter electrode in an open circuit state is substantially equal to the oxidation/reduction potential of Li, and thus, the open circuit voltage in the monopolar battery is substantially equal to the potential of the negative electrode containing a carbon material to the oxidation/reduction potential of Li. That is, the fact that the open circuit voltage in the unipolar battery is 1.5 V or more means that lithium ions that can be occluded and released in association with charge-discharge are sufficiently released from the carbon material that is the negative active material.

In the nonaqueous electrolyte energy storage device (A), the lithium salt contains lithium bis(fluorosulfonyl)imide (LiFSI), and the content of LiFSI in the lithium salt is 40 mol% or more. When LiFSI is contained in a predetermined amount or more as a component of the lithium salt as described above, the capacity retention ratio after charge-discharge cycle is higher, and the internal resistance increase rate is lower.

In the nonaqueous electrolyte energy storage device (A), the lithium salt preferably contains lithium hexafluorophosphate (LiPF₆). When the lithium salt contains LiPF₆, the capacity retention ratio after the charge-discharge cycle is higher, and the internal resistance increase rate is lower.

In the nonaqueous electrolyte energy storage device (A), it is preferable that the lithium salt contains lithium bis(fluorosulfonyl)imide (LiFSI) and lithium hexafluorophosphate (LiPF₆), a ratio of the content of LiFSI to the content of LiPF₆ (lithium bis(fluorosulfonyl)imide : lithium hexafluorophosphate) is in a range of 50 : 50 to 99 : 1 at a molar ratio, and a total content of LiFSI and LiPF₆ in the lithium salt is 90 mol% or more and 100 mol% or less. By providing such a nonaqueous electrolyte energy storage device, the capacity retention ratio after the charge-discharge cycle is higher, and the internal resistance increase rate is lower.

In the nonaqueous electrolyte energy storage device (A), the total content of graphite and amorphous carbon in the negative active material contained in the negative electrode is preferably 100% by mass. With such a negative electrode, the capacity retention ratio after the charge-discharge cycle is further increased.

A nonaqueous electrolyte energy storage device according to another aspect of the present invention is a nonaqueous electrolyte energy storage device (B) including: a positive electrode containing lithium iron phosphate; a negative electrode containing at least one of graphite and non-graphitic carbon and carbon black; and a nonaqueous electrolyte containing LiPF₆, in which a concentration of the LiPF₆ in the nonaqueous electrolyte is 0.7 mol/dm³ or less.

The nonaqueous electrolyte energy storage device (B) has a high capacity retention ratio after the charge-discharge cycle and a low internal resistance increase rate. Although the reason why the above effect is produced in the nonaqueous electrolyte energy storage device (B) is not clear, the same reason is presumed as in the above-described nonaqueous electrolyte energy storage device (A).

Hereinafter, a nonaqueous electrolyte energy storage device and a method for manufacturing a nonaqueous electrolyte energy storage device according to an embodiment of the present invention, and other embodiments will be described in detail. It is to be noted that the names of the respective constituent members (respective constituent elements) for use in the respective embodiments may be different from the names of the respective constituent members (respective constituent elements) for use in the background art.

### <Nonaqueous electrolyte energy storage device>

The nonaqueous electrolyte energy storage device according to an embodiment of the present invention has a positive electrode, a negative electrode, and a nonaqueous electrolyte. The nonaqueous electrolyte energy storage device may further include a separator. Hereinafter, a nonaqueous electrolyte secondary battery (hereinafter, also simply referred to as a "secondary battery") will be described as an example of the nonaqueous electrolyte energy storage device. The positive electrode and the negative electrode usually form an electrode assembly alternately superposed by stacking or winding with a separator interposed therebetween. That is, the electrode assembly usually includes the positive electrode, the negative electrode, and the separator. This electrode assembly is housed in a case, and the case is filled with the nonaqueous electrolyte. The nonaqueous electrolyte is interposed between the positive electrode and the negative electrode. As the case, a known metal case or resin case or the like, which is usually used as a case of a secondary battery, can be used.

### (Positive electrode)

The positive electrode has a positive substrate and a positive active material layer disposed directly or via an intermediate layer on the positive substrate.

The positive electrode substrate exhibits conductivity. Whether the positive substrate "exhibits conductivity" is determined by the volume resistivity of 1×10⁷ Ω ·cm measured in conformity with JIS-H-0505 (1975) as a threshold. As the material of the substrate, metals such as aluminum, titanium, tantalum, and stainless steel, or alloys thereof are used. Among these materials, aluminum and an aluminum alloy are preferable for the balance between conductivity level and cost. Examples of the form of the positive electrode substrate include a foil, and a vapor deposition film, and a foil is preferred from the viewpoint of cost. Namely, the positive electrode substrate is preferably an aluminum foil and an aluminum alloy foil. Examples of the aluminum or aluminum alloy include A1085 and A3003 prescribed in JIS-H-4000 (2014). It may be preferable that the positive substrate does not have a through hole.

The average thickness of the positive substrate is preferably 3 µm or more and 50 µm or less, more preferably 5 µm or more and 40 µm or less, still more preferably 8 µm or more and 30 µm or less, particularly preferably 10 µm or more and 25 µm or less. When the average thickness of the positive substrate falls within the range mentioned above, the energy density per volume of the secondary battery can be increased while increasing the strength of the positive substrate.

The intermediate layer is a coating layer on the surface of the positive substrate, and contains particles having conductivity (conductive particles) such as carbon particles to decrease contact resistance between the positive substrate and the positive active material layer. The configuration of the intermediate layer is not particularly limited, and can be formed from, for example, a composition containing a resin binder and conductive particles.

The positive active material layer includes a positive active material. The positive active material layer includes optional components such as a conductive agent, a binder, a thickener, a filler, and a dispersant if necessary.

The positive active material layer contains lithium iron phosphate as a positive active material. The lithium iron phosphate may include transition metal elements other than iron elements, other metal elements, halogen elements, other typical elements, and the like. Examples of the lithium iron phosphate include a compound having an olivine type crystal structure and represented by LiFe₍₁₋ₓ₎MₓPO₄ (M represents at least one transition metal element other than Fe, 0 ≤ x ≤ 0.5). Examples of the M include Mn, Ni, and Co. The x is preferably 0 or more and 0.2 or less, more preferably 0 or more and 0.1 or less, and may be still more preferably 0.

When the lithium iron phosphate is in the form of particles, this surface may be coated with another material or may form a composite with another material. However, it is sometimes preferable that the surface of particles of the lithium iron phosphate is not coated with non-graphitic carbon.

The positive active material layer may contain a positive active material other than lithium iron phosphate. Examples of other positive active materials include lithium transition metal composite oxides and polyanion compounds other than lithium iron phosphate. Examples of the lithium transition metal composite oxide include composite oxides represented by LiₓMO_{y} (M represents at least one transition metal element) (LiₓCoO₂, LiₓNiO₂, LiₓMnO₃, LiₓNi_{α}Co_{1-α}O₂, LiₓNi_{α}Co_{β}Al_{1-α-β}O₂, LiₓNi_{α}Mn_{β}Co_{1-α-β}O₂, Li₁₊ₓ(Ni_{α}Mn_{β}Co_{1-α-β})₁₋ₓO₂ and the like each having a layered α-NaFeO₂-type crystal structure, and LiₓMn₂O₄, LiₓNi_{α}Mn_{2-α}O₄ and the like each having a spinel-type crystal structure). Examples of the polyanion compound other than lithium iron phosphate include LiMnPO₄, LiNiPO₄, LiCoPO₄, Li₃V₂(PO₄)₃, Li₂MnSiO₄, and Li₂CoPO₄F. The element or polyanion in these compounds may be partially substituted by another element or anion species. When these materials are in the form of particles, these surfaces may be coated with another material or may form a composite with another material.

The content of lithium iron phosphate in the entire positive active material may be 70% by mass or more and 100% by mass or less, 90% by mass or more and 100% by mass or less, 95% by mass or more and 100% by mass or less, or 100% by mass. In the conventional nonaqueous electrolyte energy storage device, when the content of lithium iron phosphate in the entire positive active material is large, an elution amount of iron ions increases, so that the capacity retention ratio tends to decrease and the internal resistance tends to increase. Therefore, in the nonaqueous electrolyte energy storage device according to an embodiment of the present invention, when the content of lithium iron phosphate in the entire positive active material is large, the effect that the capacity retention ratio after the charge-discharge cycle is high and the internal resistance increase rate is low can be particularly sufficiently obtained.

The positive active material is usually a particle (powder). The average particle size of the positive active material (in particular, lithium iron phosphate) is preferably, for example, 0.1 µm or more and 20 µm or less. By setting the average particle size of the positive active material to be equal to or more than the lower limit mentioned above, the positive active material is easily manufactured or handled. By setting the average particle size of the positive active material to be equal to or less than the upper limit mentioned above, the electron conductivity of the positive active material layer is improved. In the case of using a composite of the positive active material and another material, the average particle size of the composite is regarded as the average particle size of the positive active material. The "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, or the like is used in order to obtain a powder with a predetermined particle size. Examples of the crushing method include a method of using a mortar, a ball mill, a sand mill, a vibratory ball mill, a planetary ball mill, a jet mill, a counter jet mill, a whirling airflow-type jet mill, a sieve, or the like. At the time of crushing, wet-type crushing in coexistence of water or an organic solvent such as hexane can also be used. As a classification method, a sieve or a wind force classifier or the like is used based on the necessity both in dry manner and in wet manner.

The content of the positive active material in the positive active material layer is, for example, preferably 80% by mass or more and 98% by mass or less, and more preferably 90% by mass or more. By setting the content of the positive active material in the above range, it is possible to achieve both high energy density and productivity of the positive active material layer. As the preferred content of lithium iron phosphate in the positive active material layer, a preferred range of the content of the positive active material can be adopted.

The conductive agent is not particularly limited so long as being a conductive material that does not adversely affect secondary battery performance. Examples of such a conductive agent include carbon blacks such as natural or artificial graphite, furnace black, acetylene black, and ketjen black, metal, and conductive ceramic, and acetylene black is preferable. Examples of the form of the conductive agent include a powdery form and a fibrous form. The content of the conductive agent in the positive active material layer is, for example, preferably 0.1% by mass or more and 10% by mass or less, and more preferably 3% by mass or more and 9% by mass or less. By setting the content of the conductive agent in the above range, the energy density of the secondary battery can be enhanced.

Examples of the binder include: thermoplastic resins such as fluororesin (polytetrafluoroethylene (PTFE), polyvinylidene fluoride (PVDF), etc.), polyethylene, polypropylene, and polyimide; elastomers such as ethylene-propylene-diene rubber (EPDM), sulfonated EPDM, styrenebutadiene rubber (SBR), and fluororubber; and polysaccharide polymers. The content of the binder in the positive active material layer, for example, preferably 1% by mass or more and 10% by mass or less, and more preferably 3% by mass or more and 9% by mass or less. By setting the content of the binder in the above range, the active material can be stably held.

Examples of the thickener include polysaccharide polymers such as carboxymethylcellulose (CMC) and methylcellulose. Also, when the thickener includes a functional group that is reactive with lithium, it is preferable to deactivate this functional group by methylation and the like in advance. It may be preferable that the positive active material layer does not contain a thickener.

The filler is not particularly limited so long as it does not adversely affect secondary battery performance. Examples of the filler include polyolefins such as polypropylene and polyethylene, inorganic oxides such as silicon dioxide, aluminum oxide, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, barium sulfate and the like, nitrides such as aluminum nitride and silicon nitride, and substances derived from mineral resources, such as talc, montmorillonite, boehmite, zeolite, apatite, kaolin, mullite, spinel, olivine, sericite, bentonite and mica, and artificial products thereof. It may be preferable that the positive active material layer does not contain a filler.

The positive active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Nb, and W as a component other than the positive active material, the conductive agent, the binder, the thickener, and the filler.

### (Negative electrode)

The negative electrode has a negative substrate and a negative active material layer disposed directly or via an intermediate layer on the negative substrate. The intermediate layer may have the same configuration as the intermediate layer of the positive electrode.

Although the negative electrode substrate may have the same configuration as that of the positive electrode substrate, as the material, metals such as copper, nickel, stainless steel, and nickel-plated steel or alloys thereof are used, and copper or a copper alloy is preferable. That is, the negative substrate is preferably a copper foil or a copper alloy foil. Examples of the copper foil include a rolled copper foil and an electrolytic copper foil. It may be preferable that the negative substrate does not have a through hole.

The average thickness of the negative substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative substrate is within the above range, it is possible to enhance the energy density per volume of a secondary battery while increasing the strength of the negative substrate.

The negative active material layer includes a negative active material and a conductive agent. The negative active material layer contains optional components such as a binder, a thickener, a filler, and a dispersant if necessary. As the optional components such as a binder, a thickener, a filler, and a dispersant, the same components as those in the positive active material layer can be used.

The negative active material layer contains at least one of graphite and non-graphitic carbon as the negative active material, and preferably contains graphite.

Examples of the graphite include natural graphite and artificial graphite. Artificial graphite is preferable from the viewpoint that a material having stable physical properties can be obtained.

Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material.

The "hardly graphitizable carbon" refers to a carbon material in which the d002 is 0.36 nm or more and 0.42 nm or less.

The "easily graphitizable carbon" refers to a carbon material in which the d002 is 0.34 nm or more and less than 0.36 nm.

The negative active material layer may contain a negative active material other than graphite and non-graphitic carbon. Examples of other negative active materials include metal Li; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; and a polyphosphoric acid compound.

The total content of the graphite and the non-graphitic carbon in the entire negative active material may be 70% by mass or more and 100% by mass or less, and may be 90% by mass or more, 95% by mass or more, or 100% by mass. The total content of the graphite and the non-graphitic carbon in the entire negative active material may be 100% by mass.

The negative active material is typically particles (powder). The average particle size of the negative active material (in particular, graphite and non-graphitic carbon) is, for example, 1 µm or more and 100 µm or less, and preferably 5 µm or more and 50 µm or less. By setting the average particle size of the negative active material to be equal to or more than the lower limit mentioned above, the negative active material is easily produced or handled. By setting the average particle size of the negative active material to be equal to or less than the upper limit mentioned above, the electron conductivity of the active material layer is improved. A crusher, a classifier, or the like is used in order to obtain a powder with a predetermined particle size. The crushing method and classification method can be selected from, for example, the methods exemplified for the positive electrode.

The content of the negative active material in the negative active material layer is preferably 60% by mass or more and 99% by mass or less, more preferably 90% by mass or more and 98% by mass or less. The content of the negative active material falls within the range mentioned above, thereby allowing a balance to be achieved between the increased energy density and productivity of the negative active material layer. As the preferred total content of the graphite and the non-graphitic carbon in the negative active material layer, a preferred range of the content of the negative active material can be adopted.

The negative active material layer contains carbon black as a conductive agent. Examples of the carbon black include furnace black, acetylene black, and ketjen black, and acetylene black is preferable.

Carbon black is typically particles (powder). The average particle size of the carbon black is, for example, preferably 5 nm or more and 200 nm or less, and more preferably 10 nm or more and 100 nm or less. When the average particle size of carbon black is in the above range, a better conductive network is formed in the negative active material layer, so that the capacity retention ratio after the charge-discharge cycle is higher and the internal resistance increase rate is lower.

The content of carbon black in the negative active material layer is preferably 0.1% by mass or more and 10% by mass or less, more preferably 0.3% by mass or more and 5% by mass or less, and still more preferably 0.5% by mass or more and 2% by mass or less. When the content of carbon black is in the above range, a better conductive network is formed in the negative active material layer, so that the capacity retention ratio after the charge-discharge cycle is higher and the internal resistance increase rate is lower.

The negative active material layer may or may not further contain a conductive agent other than carbon black. Examples of the other conductive agent include conductive agents other than graphite and carbon black mentioned as the conductive agent which may be contained in the positive active material layer.

The binder contained in the negative active material layer is preferably an elastomer, and more preferably SBR. By using such a binder for the negative active material layer, the capacity retention ratio after the charge-discharge cycle may be higher, and the internal resistance increase rate may be lower. The content of the binder in the negative active material layer, for example, preferably 0.5% by mass or more and 8% by mass or less, and more preferably 1% by mass or more and 4% by mass or less.

The content of the thickener in the negative active material layer is, for example, preferably 0.1% by mass or more and 5% by mass or less, more preferably 0.4% by mass or more and 3% by mass or less.

It may be preferable that the negative active material layer does not contain a filler.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Nb, and W as a component other than the negative active material, the conductive agent, the binder, the thickener, and the filler.

### (Nonaqueous electrolyte)

The nonaqueous electrolyte includes a lithium salt. The nonaqueous electrolyte may be a nonaqueous electrolyte solution. The nonaqueous electrolyte solution which is a nonaqueous electrolyte usually contains a nonaqueous solvent in addition to a lithium salt.

In an embodiment of the present invention, the concentration of the lithium salt in the nonaqueous electrolyte is 0.7 mol/dm³ or less. The upper limit of the concentration of the lithium salt is preferably 0.65 mol/dm³, and may be more preferably 0.6 mol/dm³ or 0.55 mol/dm³. By setting the concentration of the lithium salt in the nonaqueous electrolyte to be equal to or less than the upper limit mentioned above, the capacity retention ratio after the charge-discharge cycle is high and the internal resistance increase rate is low. The lower limit of the concentration of the lithium salt in the nonaqueous electrolyte is, for example, preferably 0.1 mol/dm³, more preferably 0.3 mol/dm³, and still more preferably 0.4 mol/dm³ or 0.5 mol/dm³.

Examples of the lithium salt include inorganic lithium salts such as LiPF₆, LiPO₂F₂, LiBF₄, LiClO₄, and LiN(SO₂F)₂, and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃ and LiC(SO₂C₂F₅)₃. Among these salts, inorganic lithium salts are preferable, and LiPF₆ and/or LiFSI is more preferable.

In an embodiment of the present invention, when LiPF₆ is contained as the lithium salt, the content of LiPF₆ in the lithium salt is preferably more than 0 mol% and 100 mol% or less, more preferably 1 mol% or more and 60 mol% or less, still more preferably 3 mol% or more and 30 mol% or less, and particularly preferably 5 mol% or more and 25 mol% or less. By setting the content of LiPF₆ as described above, the capacity retention ratio after the charge-discharge cycle is higher, and the internal resistance increase rate is lower.

In an embodiment of the present invention, when LiFSI is contained as the lithium salt, the content of LiFSI in the lithium salt is preferably 40 mol% or more and 100 mol% or less, more preferably 70 mol% or more and 100 mol% or less, still more preferably 75 mol% or more and 100 mol% or less, and particularly preferably 75 mol% or more and 95 mol% or less. By setting the content of LiFSI as described above, the capacity retention ratio after the charge-discharge cycle is higher, and the internal resistance increase rate is lower.

In an embodiment of the present invention, the lithium salt preferably contains LiFSI and LiPF₆. In this way, the capacity retention ratio after the charge-discharge cycle is higher, and the internal resistance increase rate is lower.

In an embodiment of the present invention, when the lithium salt includes LiFSI and LiPF₆, a ratio (LiFSI : LiPF₆) of the content of LiFSI to the content of LiPF₆ is preferably in a range of 50 : 50 to 99 : 1, more preferably in a range of 70 : 30 to 97 : 3, and still more preferably in a range of 75 : 25 to 95 : 5 in molar ratio. In this way, the capacity retention ratio after the charge-discharge cycle is higher, and the internal resistance increase rate is lower.

In an embodiment of the present invention, when the lithium salt contains LiFSI and LiPF₆, the total content of LiFSI and LiPF₆ in the lithium salt is preferably 90 mol% or more and 100 mol% or less. In this way, the capacity retention ratio after the charge-discharge cycle is higher, and the internal resistance increase rate is lower.

In another embodiment of the present invention, the nonaqueous electrolyte contains LiPF₆, which is a lithium salt, as an essential component. At this time, the concentration of LiPF₆ in the nonaqueous electrolyte is 0.7 mol/dm³ or less. The upper limit of the concentration of LiPF₆ is preferably 0.65 mol/dm³, and may be more preferably 0.6 mol/dm³ or 0.55 mol/dm³. By setting the concentration of LiPF₆ in the nonaqueous electrolyte to be equal to or less than the upper limit mentioned above, the capacity retention ratio after the charge-discharge cycle is high and the internal resistance increase rate is low. The lower limit of the concentration of LiPF₆ in the nonaqueous electrolyte is, for example, preferably 0.1 mol/dm³, more preferably 0.3 mol/dm³, and still more preferably 0.4 mol/dm³ or 0.5 mol/dm³. In the present embodiment, the nonaqueous electrolyte may or may not contain a lithium salt other than LiPF₆, and it is preferable that the nonaqueous electrolyte substantially does not contain another lithium salt. In the present embodiment, the content of LiPF₆ in the entire lithium salt is preferably 70 mol% or more, more preferably 80 mol% or more, still more preferably 90 mol% or more, and particularly preferably 95 mol% or more.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, those in which some hydrogen atoms contained in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these examples, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these, DMC and EMC are preferable.

As the nonaqueous solvent, it is preferable to use at least one of the cyclic carbonate and the chain carbonate, and it is more preferable to use the cyclic carbonate and the chain carbonate in combination. By using the cyclic carbonate, dissociation of the electrolyte salt can be promoted to improve the ionic conductivity of the nonaqueous electrolyte solution. The use of the chain carbonate allows the viscosity of the nonaqueous electrolyte solution to be kept low. When the cyclic carbonate and the chain carbonate are used in combination, a volume ratio of the cyclic carbonate to the chain carbonate (cyclic carbonate : chain carbonate) is preferably in a range from 5 : 95 to 50 : 50, for example.

The nonaqueous electrolyte may contain various additives as other components. Examples of other components include aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, dimethyl sulfate, ethylene sulfate, sulfolane, dimethyl sulfone, diethyl sulfone, dimethylsulfoxide, diethylsulfoxide, tetramethylene sulfoxide, diphenyl sulfide, 4,4'-bis(2,2-dioxo-1,3,2-dioxathiolane, 4-methylsulfonyloxymethyl-2,2-dioxo-1,3,2-dioxathiolane, thioanisole, diphenyl disulfide, dipyridinium disulfide, perfluorooctane, tristrimethylsilyl borate, tristrimethylsilyl phosphate, and tetrakistrimethylsilyl titanate. One of these components may be used alone, or two or more thereof may be used in mixture.

The content of components other than the lithium salt and the nonaqueous solvent contained in the nonaqueous electrolyte is preferably 0.01% by mass or more and 10% by mass or less, more preferably 0.1% by mass or more and 7% by mass or less, still more preferably 0.2% by mass or more and 5% by mass or less, particularly preferably 0.3% by mass or more and 3% by mass or less with respect to the entire nonaqueous electrolyte. The content may be 1% by mass or less or 0.1% by mass or less. The content of the other components falls within the above range, thereby making it possible to improve capacity retention performance or cycle performance after high-temperature storage, and to further improve safety.

### (Separator)

The separator can be appropriately selected from known separators. As the separator, for example, a separator composed of only a substrate layer, a separator where a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of liquid retaining property of the nonaqueous electrolyte. As the material for the substrate layer of the separator, for example, a polyolefin such as polyethylene or polypropylene is preferable from the viewpoint of shutdown function, and polyimide, aramid, or the like is preferable from the viewpoint of resistance to oxidative decomposition. As the substrate layer of the separator, a material obtained by combining these resins may be used.

The heat resistant particles included in the heat resistant layer preferably have a mass loss of 5% or less in the case of temperature increase from room temperature to 500°C under the air atmosphere of 1 atm, and more preferably have a mass loss of 5% or less in the case of temperature increase from room temperature to 800°C. Examples of materials that have a mass loss equal to or less than a predetermined value include inorganic compounds. Examples of the inorganic compound include oxides such as iron oxide, silicon oxide, aluminum oxide, titanium oxide, barium titanate, zirconium oxide, calcium oxide, strontium oxide, barium oxide, magnesium oxide and aluminosilicate; hydroxides such as magnesium hydroxide, calcium hydroxide and aluminum hydroxide; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; and substances derived from mineral resources, such as talc, montmorillonite, boehmite, zeolite, apatite, kaolin, mullite, spinel, olivine, sericite, bentonite and mica, and artificial products thereof. As the inorganic compounds, a simple substance or a complex of these substances may be used alone, or two or more thereof may be used in mixture. Among these inorganic compounds, silicon oxide, aluminum oxide, or aluminosilicate is preferable from the viewpoint of safety of the secondary battery.

The porosity of the separator is preferably 80% by volume or less from the viewpoint of strength, and is preferably 20% by volume or more from the viewpoint of discharge performance. The "porosity" herein is a volume-based value, which means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. The use of the polymer gel has the effect of suppressing liquid leakage. As the separator, the polymer gel may be used in combination with a porous resin film, a nonwoven fabric, or the like as described above.

### <Method for manufacturing nonaqueous electrolyte energy storage device>

The method of fabricating the nonaqueous electrolyte energy storage device according to the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween. Housing the nonaqueous electrolyte in the case can be appropriately selected from known methods. For example, in the case of using a nonaqueous electrolyte solution for the nonaqueous electrolyte, the nonaqueous electrolyte solution may be injected from an inlet formed in the case, followed by sealing the inlet.

### <Other embodiments>

In the above-described embodiments, an embodiment in which the nonaqueous electrolyte energy storage device is a nonaqueous electrolyte secondary battery has been mainly described, but the nonaqueous electrolyte energy storage device may be other nonaqueous electrolyte energy storage device. Examples of the other nonaqueous electrolyte energy storage device include capacitors (electric double layer capacitors and lithium ion capacitors).

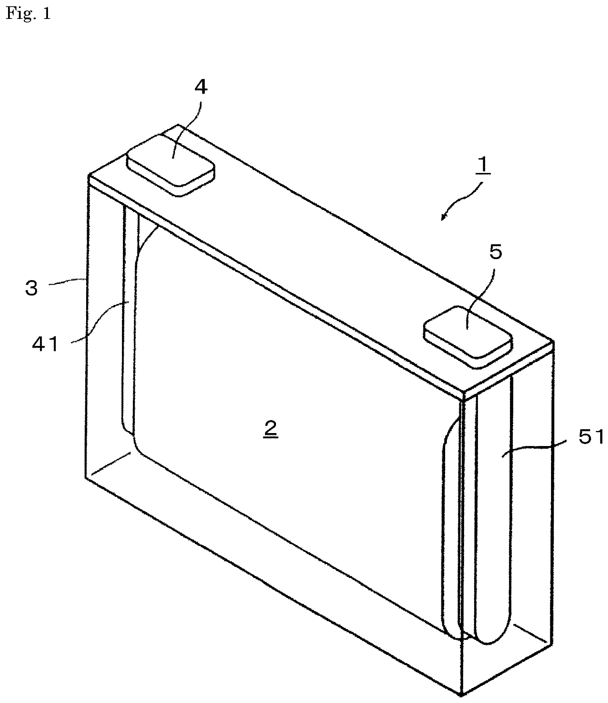

Fig. 1 is a schematic view of a square-shaped nonaqueous electrolyte energy storage device 1 as an embodiment of the nonaqueous electrolyte energy storage device according to the present invention. Fig. 1 is a view illustrating the inside of a case in a perspective manner. In the nonaqueous electrolyte energy storage device 1 shown in Fig. 1, an electrode assembly 2 is housed in a case 3. The electrode assembly 2 is formed by winding a positive electrode including a positive active material layer and a negative electrode including a negative active material layer with a separator interposed therebetween. The positive electrode is electrically connected to a positive electrode terminal 4 through a positive electrode lead 41, and the negative electrode is electrically connected to a negative electrode terminal 5 through a negative electrode lead 51. A nonaqueous electrolyte is injected in the case 3.

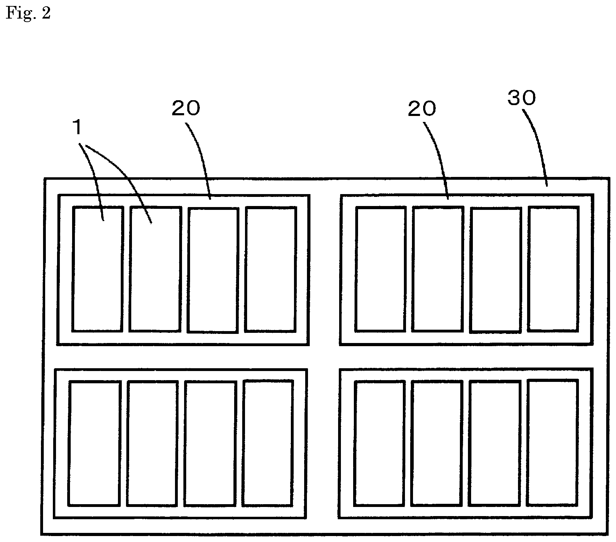

The shape of the nonaqueous electrolyte energy storage device according to an embodiment of the present invention is not particularly limited, and examples thereof include cylindrical batteries, prismatic batteries, flat batteries, coin batteries and button batteries. The present invention can also be realized as an energy storage apparatus including a plurality of the nonaqueous electrolyte energy storage devices. Fig. 2 shows an embodiment of an energy storage apparatus. In Fig. 2, an energy storage apparatus 30 includes a plurality of energy storage units 20. Each of the energy storage units 20 includes a plurality of the nonaqueous electrolyte energy storage devices 1. The energy storage apparatus 30 can be mounted as a power source for an automobile such as an electric vehicle (EV), a hybrid vehicle (HEV), a plug-in hybrid vehicle (PHEV), or the like.

### EXAMPLES

Hereinafter, the present invention will be described in more detail with reference to Examples, but the present invention is not limited to the following Examples.

### [Example 1]

### (Fabrication of positive electrode)

A positive electrode paste containing LiFePO₄, acetylene black, and PVDF in a mass ratio (in terms of solid content) of 91 : 5 : 4 and including n-methyl-2-pyrrolidone (NMP) as a dispersion medium was prepared. The positive electrode paste was applied onto the surface of an aluminum foil, and was dried to prepare a positive electrode.

### (Fabrication of negative electrode)

A negative electrode paste containing acetylene black, which is a kind of graphite and carbon black (CB), SBR and CMC in a mass ratio (in terms of solid content) of 95.7 : 1.0 : 2.1 : 1.2 and containing water as a dispersion medium was prepared. The negative electrode paste was applied onto the surface of a copper foil, and was dried to prepare a negative electrode.

### (Preparation of nonaqueous electrolyte)

LiPF₆ was dissolved as an electrolyte salt at a concentration of 0.3 mol/dm³ in a nonaqueous solvent in which EC, DMC, and EMC were mixed at a volume ratio of 20 : 35 : 45 to obtain a nonaqueous electrolyte.

### (Assembly)

The above-mentioned positive electrode and negative electrode were wound with a polyolefin porous resin film separator interposed therebetween to prepare an electrode assembly. After the electrode assembly was inserted into an aluminum case, a lid of the container was laser-welded. The nonaqueous electrolyte described above was injected into the case through an electrolyte solution filling hole provided in the case, and then the electrolyte solution filling hole was sealed to obtain a nonaqueous electrolyte energy storage device of Example 1.

### [Examples 2 and 3, Comparative Examples 1 and 2]

Nonaqueous electrolyte energy storage devices of Examples 2 and 3 and Comparative Examples 1 and 2 were obtained similarly to Example 1 except that the concentration of LiPF₆ in the nonaqueous electrolyte was set as shown in Table 1.

### [Comparative Example 3]

### (Fabrication of positive electrode)

A positive electrode paste containing LiFePO₄, acetylene black, and PVDF in a mass ratio (in terms of solid content) of 90 : 5 : 5 and including NMP as a dispersion medium was prepared. The positive electrode paste was applied onto the surface of an aluminum foil, and was dried to prepare a positive electrode.

### (Fabrication of negative electrode)

A negative electrode paste containing graphite and PVDF in a mass ratio (in terms of solid content) of 94 : 6 and containing NMP as a dispersion medium was prepared. The negative electrode paste was applied onto the surface of a copper foil, and was dried to prepare a negative electrode.

### (Preparation of nonaqueous electrolyte)

LiPF₆ was dissolved as an electrolyte salt at a concentration of 0.7 mol/dm³ in a nonaqueous solvent in which EC, DMC, and EMC were mixed at a volume ratio of 25 : 20 : 55 to obtain a nonaqueous electrolyte.

### (Assembly)

The above-mentioned positive electrode and negative electrode were wound with a polyolefin porous resin film separator interposed therebetween to prepare an electrode assembly. After the electrode assembly was inserted into an aluminum case, a lid of the container was laser-welded. The nonaqueous electrolyte described above was injected into the case through an electrolyte solution filling hole provided in the case, and then the electrolyte solution filling hole was sealed to obtain a nonaqueous electrolyte energy storage device of Comparative Example 3.

### [Comparative Examples 4 and 5]

Nonaqueous electrolyte energy storage devices of Comparative Examples 4 and 5 were obtained similarly to Comparative Example 3 except that the concentration of LiPF₆ in the nonaqueous electrolyte was set as shown in Table 1.

### [Comparative Example 6]

A nonaqueous electrolyte energy storage device according to Comparative Example 6 was obtained similarly to Comparative Example 1.

### [Example 4]

A nonaqueous electrolyte energy storage device according to Example 4 was obtained similarly to Example 2.

### [Example 5]

LiPF₆ and LiFSI as electrolyte salts were dissolved at concentrations of 0.4 mol/dm³ and 0.1 mol/dm³, respectively, in a nonaqueous solvent obtained by mixing EC, DMC, and EMC at a volume ratio of 20 : 35 : 45 to obtain a nonaqueous electrolyte. A nonaqueous electrolyte energy storage device of Example 5 was obtained similarly to Example 1 except that the nonaqueous electrolyte thus obtained was used.

### [Examples 6 and 7]

Nonaqueous electrolyte energy storage devices of Examples 6 and 7 were obtained similarly to Example 5 except that the concentrations of LiPF₆ and LiFSI in the nonaqueous electrolyte were changed as shown in Table 2.

### [Example 8]

A nonaqueous electrolyte energy storage device of Example 8 was obtained similarly to Example 2 except that LiFSI was used instead of LiPF₆.

### [Evaluation]

### (Initial performance evaluation)

The nonaqueous electrolyte energy storage devices of Examples and Comparative Examples were subjected to a capacity confirmation test by the following method. Constant current charge was performed at 25°C to 3.6 V at a charge current of 1.0 C, and then constant voltage charge was performed at 3.6 V. With regard to the charge termination conditions, charge was performed until the total charge time reached 3 hours. After charge, a pause period of 10 minutes was provided, and then constant current discharge was performed at 25°C to 2.0 V at a discharge current of 1.0 C. The discharge capacity thus obtained was taken as an initial discharge capacity.

The internal resistance (direct current resistance: DCR) at 25°C at 50% SOC (charging depth) was measured by the following method. For each nonaqueous electrolyte energy storage device subjected to the capacity confirmation test, the SOC was set to 50% by constant current charge at a charge current of 1.0 C for 0.5 hours, and a voltage (E1) at the time of discharge at 0.2 C for 10 seconds, a voltage (E2) at the time of discharge at 0.5 C for 10 seconds, and a voltage (E3) at the time of discharge at 1.0 C for 10 seconds were measured. After completion of each discharge, constant current charge was performed at a charge current of 0.5 C to set the SOC to 50%. The direct current resistance was calculated using these measurement values (E1, E2, E3). Specifically, the measurement values E1, E2, and E3 were plotted with the horizontal axis representing the current and the vertical axis representing the voltage, and the slope of a regression line (approximate line) obtained by a least squares method was determined from these three points, and taken as the initial internal resistance.

### (Charge-discharge cycle test)

Each of the nonaqueous electrolyte energy storage devices according to Examples and Comparative Examples was subjected to the following charge-discharge cycle test. Constant current charge was performed at 45°C to 3.6 V at a charge current of 1.0 C, and then constant voltage charge was performed at 3.6 V. With regard to the charge termination conditions, charge was performed until the total charge time reached 3 hours. Thereafter, a pause period of 10 minutes was provided. Subsequently, constant current discharge was performed up to 2.0 V at a discharge current of 1.0 C, followed by a rest period of 10 minutes. In Examples 1 to 3 and Comparative Examples 1 to 5, this charge-discharge was performed for 500 cycles. In Examples 4 to 8 and Comparative Example 6, this charge-discharge was performed for 300 cycles.

### (Performance evaluation after charge-discharge cycle)

After the charge-discharge cycle test, the capacity confirmation test and measurement of the internal resistance at 25°C at 50% SOC were performed similarly to the above "Initial performance evaluation". The discharge capacity after the charge-discharge cycle test was divided by the initial discharge capacity to determine the capacity retention ratio (%). In addition, an increase amount of the internal resistance after the charge-discharge cycle test from the initial internal resistance was divided by the initial internal resistance to determine the internal resistance increase rate (%).

For Examples 1 to 3 and Comparative Examples 1 and 2 in which the negative electrode is a nonaqueous electrolyte energy storage device containing acetylene black which is a kind of carbon black (CB), the capacity retention ratio and the resistance increase rate are shown in Table 1 as relative values based on Comparative Example 1. For Comparative Examples 3 to 5 in which the negative electrode is a nonaqueous electrolyte energy storage device not containing CB, the capacity retention ratio and the resistance increase rate are shown in Table 1 as relative values based on Comparative Example 4. In addition, in Examples 4 to 8 and Comparative Example 6 in which a test with a different number of charge-discharge cycles from that in Example 1 was performed, the capacity retention ratio and the resistance increase rate are shown in Table 2 as relative values based on Comparative Example 6.

**[Table 1]**

| | Negative electrode | Nonaqueous electrolyte | Evaluation | |
|---|---|---|---|---|
| | Presence or absence of CB | LiPF₆ concentration | Capacity retention ratio after 500 cycles (Relative value) | Internal resistance increase rate (Relative value) |
| | - | mol/dm³ | % | % |
| Example 1 | Presence | 0.3 | 117 | 76 |
| Example 2 | Presence | 0.5 | 113 | 87 |
| Example 3 | Presence | 0.7 | 104 | 93 |
| Comparative Example 1 | Presence | 0.9 | 100 | 100 |
| Comparative Example 2 | Presence | 1.1 | 94 | 107 |
| Comparative Example 3 | Absence | 0.8 | 102 | 178 |
| Comparative Example 4 | Absence | 1.0 | 100 | 100 |
| Comparative Example 5 | Absence | 1.2 | 95 | 98 |

**[Table 2]**

| | Negative electrode | Nonaqueous electrolyte | | Evaluation | |
|---|---|---|---|---|---|
| | Presence or absence of CB | LiPF₆ concentration | LiFSI concentration | Capacity retention ratio after 300 cycles (Relative value) | Internal resistance increase rate (Relative value) |
| | - | mol/dm³ | mol/dm³ | % | % |
| Comparative Example 6 | Presence | 0.9 | 0 | 100 | 100 |
| Example 4 | Presence | 0.5 | 0 | 101 | 97 |
| Example 5 | Presence | 0.4 | 0.1 | 101 | 100 |
| Example 6 | Presence | 0.3 | 0.2 | 101 | 98 |
| Example 7 | Presence | 0.2 | 0.3 | 102 | 98 |
| Example 8 | Presence | 0 | 0.5 | 102 | 97 |

From the results shown in Table 1, the following is determined. Comparison among Comparative Examples 3 to 5 shows that when the negative electrode does not contain carbon black, the internal resistance increase rate increases as the concentration of LiPF₆ decreases, and particularly when the concentration of LiPF₆ decreases to 0.8 mol/dm³, the internal resistance increase rate remarkably increases. On the other hand, comparison between Examples 1 to 3 and Comparative Examples 1 and 2 shows that when the negative electrode contains carbon black, the internal resistance increase rate decreases as the concentration of LiPF₆ decreases. In addition, it is found that the lower the concentration of LiPF₆, the higher the capacity retention ratio. That is, it is found that when the negative electrode contains carbon black and the concentration of LiPF₆ in the nonaqueous electrolyte is 0.7 mol/dm³ or less, the capacity retention ratio is high and the internal resistance increase rate is low.

From the results shown in Table 2, the following is determined. Comparison between Comparative Example 6 and Examples 4 and 8 shows that even when LiFSI is used instead of LiPF₆, setting the concentration of the lithium salt to 0.7 mol/dm³ or less can reduce the internal resistance increase rate while increasing the capacity retention ratio after the charge-discharge cycle. In addition, comparison of Examples 4 to 8 shows that when the content of lithium bis(fluorosulfonyl)imide in the lithium salt is 40 mol% or more, the capacity retention ratio after the charge-discharge cycle is higher and the internal resistance increase rate is lower.

In Reference Examples 1 and 2 below, whether or not the type of the binder of the negative electrode affected the internal resistance increase rate was examined.

### [Reference Example 1]

### (Fabrication of positive electrode)

A positive electrode paste containing LiFePO₄, acetylene black, and PVDF in a mass ratio (in terms of solid content) of 90 : 5 : 5 and including NMP as a dispersion medium was prepared. The positive electrode paste was applied onto the surface of an aluminum foil, and was dried to prepare a positive electrode.

### (Fabrication of negative electrode)

A negative electrode paste containing graphite and PVDF in a mass ratio (in terms of solid content) of 92 : 8 and containing NMP as a dispersion medium was prepared. The negative electrode paste was applied onto the surface of a copper foil, and was dried to prepare a negative electrode.

### (Preparation of nonaqueous electrolyte)

LiPF₆ was dissolved as an electrolyte salt at a concentration of 1.0 mol/dm³ in a nonaqueous solvent in which EC, DMC, and EMC were mixed at a volume ratio of 25 : 20 : 55 to obtain a nonaqueous electrolyte.

### (Assembly)

The above-mentioned positive electrode and negative electrode were wound with a polyolefin porous resin film separator interposed therebetween to prepare an electrode assembly. After the electrode assembly was inserted into an aluminum case, a lid of the container was laser-welded. The nonaqueous electrolyte described above was injected into the case through an electrolyte solution filling hole provided in the case, and then the electrolyte solution filling hole was sealed to obtain a nonaqueous electrolyte energy storage device of Reference Example 1.

### [Reference Example 2]

A nonaqueous electrolyte energy storage device of Reference Example 2 was obtained similarly to Reference Example 1 except that a negative electrode paste containing graphite, SBR and CMC at a mass ratio (in terms of solid content) of 97 : 2 : 1 and containing water as a dispersion medium was used.

### [Evaluation]

### (Charge-discharge cycle test)

Each of the nonaqueous electrolyte energy storage devices according to Reference Examples was subjected to the following charge-discharge cycle test. Constant current charge was performed at 45°C to 3.6 V at a charge current of 1.0 C, and then constant voltage charge was performed at 3.6 V. With regard to the charge termination conditions, charge was performed until the total charge time reached 3 hours. Thereafter, a pause period of 30 minutes was provided. Subsequently, constant current discharge was performed up to 2.0 V at a discharge current of 1.0 C, followed by a rest period of 30 minutes. This charge-discharge was performed 500 cycles.

### (Internal resistance increase rate)

Before and after the charge-discharge cycle, the internal resistance at 25°C at 50% SOC was measured by a similar method as above. The increase amount of the internal resistance after the charge-discharge cycle test from the initial internal resistance was divided by the initial internal resistance to determine the internal resistance increase rate (%).

The internal resistance increase rate in the nonaqueous electrolyte energy storage device of Reference Example 1 in which the binder of the negative electrode was PVDF was 23%. On the other hand, the internal resistance increase rate in the nonaqueous electrolyte energy storage device of Reference Example 2 in which the binder of the negative electrode was SBR was 20%. In Reference Examples 1 and 2, it is considered that the difference between PVDF and SBR as the binder of the negative electrode hardly affects the internal resistance increase rate.

### INDUSTRIAL APPLICABILITY

The present invention can be applied to a nonaqueous electrolyte energy storage device and the like used as a power source for electronic devices such as personal computers and communication terminals, and automobiles and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device (1) comprising:
a positive electrode containing lithium iron phosphate;
a negative electrode containing at least one selected from the group consisting of graphite and non-graphitic carbon and containing carbon black; and
a nonaqueous electrolyte containing a lithium salt, wherein
a concentration of the lithium salt in the nonaqueous electrolyte is 0.7 mol/dm³ or less, and
wherein the lithium salt contains lithium bis(fluorosulfonyl)imide.

2. The nonaqueous electrolyte energy storage device according to claim 1, wherein a content of lithium bis(fluorosulfonyl)imide in the lithium salt is 40 mol% or more.

3. The nonaqueous electrolyte energy storage device according to claim 1 or 2, wherein the lithium salt contains lithium bis(fluorosulfonyl)imide and lithium hexafluorophosphate, a ratio of the content of lithium bis(fluorosulfonyl)imide to a content of lithium hexafluorophosphate (lithium bis(fluorosulfonyl)imide : lithium hexafluorophosphate) is in a range of 50 : 50 to 99 : 1 at a molar ratio, and a total content of lithium bis(fluorosulfonyl)imide and lithium hexafluorophosphate in the lithium salt is 90 mol% or more and 100 mol% or less.

4. The nonaqueous electrolyte energy storage device according to claim 1 or 2, wherein a total content of graphite and amorphous carbon in a negative active material contained in the negative electrode is 100% by mass.

5. The nonaqueous electrolyte energy storage device according to claim 3, wherein a total content of graphite and amorphous carbon in a negative active material contained in the negative electrode is 100% by mass.

## Patentansprüche

1. Energiespeichervorrichtung mit nicht-wässrigem Elektrolyten (1), umfassend:
eine positive Elektrode, die Lithium-Eisenphosphat enthält;
eine negative Elektrode, die mindestens eines enthält, das ausgewählt ist aus der Gruppe bestehend aus Graphit und nicht-graphitischem Kohlenstoff, und Ruß enthält; und
einen nicht-wässrigen Elektrolyten, der ein Lithiumsalz enthält, wobei
eine Konzentration des Lithiumsalzes in dem nicht-wässrigen Elektrolyten 0,7 Mol/dm³ oder weniger beträgt, und
wobei das Lithiumsalz Lithiumbis(fluorsulfonyl)imid enthält.

2. Energiespeichervorrichtung mit nicht-wässrigem Elektrolyten nach Anspruch 1, wobei ein Gehalt an Lithiumbis(fluorsulfonyl)imid in dem Lithiumsalz 40 Mol-% oder mehr beträgt.

3. Energiespeichervorrichtung mit nicht-wässrigem Elektrolyten nach Anspruch 1 oder 2, wobei das Lithiumsalz Lithiumbis(fluorsulfonyl)imid und Lithiumhexafluorophosphat enthält, ein Verhältnis des Gehalts an Lithiumbis(fluorsulfonyl)imid zu einem Gehalt an Lithiumhexafluorophosphat(lithiumbis(fluorsulfonyl)imid : Lithiumhexafluorophosphat) in einem Bereich von 50:50 bis 99:1 in Bezug auf ein Molverhältnis liegt und ein Gesamtgehalt an Lithiumbis(fluorsulfonyl)imid und Lithiumhexafluorophosphat in dem Lithiumsalz 90 Mol-% oder mehr und 100 Mol-% oder weniger beträgt.

4. Energiespeichervorrichtung mit nicht-wässrigem Elektrolyten nach Anspruch 1 oder 2, wobei ein Gesamtgehalt an Graphit und amorphem Kohlenstoff in einem in der negativen Elektrode enthaltenen negativen aktiven Material 100 Masse-% beträgt.

5. Energiespeichervorrichtung mit nicht-wässrigem Elektrolyten nach Anspruch 3, wobei ein Gesamtgehalt an Graphit und amorphem Kohlenstoff in einem in der negativen Elektrode enthaltenen negativen aktiven Material 100 Masse-% beträgt.

## Revendications

1. Dispositif de stockage d'énergie à électrolyte non aqueux (1) comprenant :
une électrode positive contenant du phosphate de fer et de lithium ;
une électrode négative contenant au moins un choisi dans le groupe constitué du graphite et du carbone non graphitique et contenant du noir de carbone ; et
un électrolyte non aqueux contenant un sel de lithium, dans lequel
une concentration du sel de lithium dans l'électrolyte non aqueux est de 0,7 mol/dm³ ou moins, et
dans lequel le sel de lithium contient du bis(fluorosulfonyl)imide de lithium.

2. Dispositif de stockage d'énergie à électrolyte non aqueux selon la revendication 1, dans lequel une teneur en bis(fluorosulfonyl)imide de lithium dans le sel de lithium est de 40 % en moles ou plus.

3. Dispositif de stockage d'énergie à électrolyte non aqueux selon la revendication 1 ou 2, dans lequel le sel de lithium contient du bis(fluorosulfonyl)imide de lithium et de l'hexafluorophosphate de lithium, un rapport de la teneur en bis(fluorosulfonyl)imide de lithium à une teneur en hexafluorophosphate de lithium (bis(fluorosulfonyl)imide de lithium:hexafluorophosphate de lithium) est dans une plage de 50:50 à 99:1 en rapport molaire, et une teneur totale en bis(fluorosulfonyl)imide de lithium et en hexafluorophosphate de lithium dans le sel de lithium est de 90 % en moles ou plus et de 100 % en moles ou moins.

4. Dispositif de stockage d'énergie à électrolyte non aqueux selon la revendication 1 ou 2, dans lequel une teneur totale en graphite et en carbone amorphe dans un matériau actif négatif contenu dans l'électrode négative est de 100 % en masse.

5. Dispositif de stockage d'énergie à électrolyte non aqueux selon la revendication 3, dans lequel une teneur totale en graphite et en carbone amorphe dans un matériau actif négatif contenu dans l'électrode négative est de 100 % en masse.
